(19) Europäisches Patentamt
European Patent Office
Office européen des brevets

(11) Veröffentlichungsnummer : **0 390 023 B1**

(12) # EUROPÄISCHE PATENTSCHRIFT

(45) Veröffentlichungstag der Patentschrift :
**25.01.95 Patentblatt 95/04**

(51) Int. Cl.$^6$ : **G11B 23/087**

(21) Anmeldenummer : **90105689.5**

(22) Anmeldetag : **26.03.90**

(54) **Kompakt-Kassette mit mindestens einer etwa rechteckförmigen Beilagefolie und Beilagefolie dafür.**

(30) Priorität : **28.03.89 DE 8903787 U**

(43) Veröffentlichungstag der Anmeldung :
**03.10.90 Patentblatt 90/40**

(45) Bekanntmachung des Hinweises auf die Patenterteilung :
**25.01.95 Patentblatt 95/04**

(84) Benannte Vertragsstaaten :
**DE FR GB IT NL**

(56) Entgegenhaltungen :
**EP-A- 0 203 302**
**EP-A- 0 277 301**

(73) Patentinhaber : **BASF Aktiengesellschaft**
**Carl-Bosch-Strasse 38**
**D-67063 Ludwigshafen (DE)**

(72) Erfinder : **Manzke, Klaus**
**Schulstrasse 10**
**D-6721 Westheim (DE)**
Erfinder : **Ahlers, Juergen**
**Beethovenstrasse 32**
**D-6845 Gross-Rohrheim (DE)**

**EP 0 390 023 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Beilagefolie aus Kunststoff mit etwa einer Rechteckform für eine Kompakt-Kassette, wobei die Kunststoff-Beilagefolie über und/oder unter den Bandwickeln in der Kassette anbringbar ist und diese flächenmäßig im wesentlichen überdeckt und mindestens einen Längsknick zur elastischen Lagerung der Bandwickel aufweist, sowie eine Kompakt-Kassette mit wenigstens einer derartigen Beilagefolie.

Es ist bekannt, in Kompakt-Kassetten (entsprechend DIN 45516) Beilage-Folien als Mittel zur Verbesserung der Wickellagerung und der Gleiteigenschaften beim Wickel- und Spielbetrieb zu verwenden. Diese Folien können mit Knicken und Sicken versehen sein zur Wickellagerung und zur Verringerung der Kontaktflächen.

In der Regel bestehen diese Beilagefolien aus (aliphatischem, nicht aromatischem) Polyestermaterial, genauer aus Polyethylenterephthalat mit geringer Temperaturstabilität.

Mit der EP-OS 203 302 sind Beilagefolien mit Längsknicken aus Polyterephthalat-Material bestehend bekannt, die vorstehend erwähnte geringe Temperaturstabilität aufweisen. Die außerdem in der EP-OS 203 302 verwendete Beilagefolie aus Polytetrafluorethylen (Teflon) ist zwar hochtemperaturstabil, aber ungeeignet zur dynamisch elastischen Lagerung für die Bandwickel der Kompakt-Kassette, da dauerhafte Längsknicke sich nicht darin ausbilden lassen aufgrund der Rückverformungseigenschaften des Kunststoff-Materials.

Der Erfindung liegt die Aufgabe zugrunde, eine Beilagefolie und Kompakt-Kassetten damit bereitzustellen, die mit mindestens einer Längsknick-Folienausbildung auch nach Lagerung unter Temperatureinwirkung von ca. 85°C, insbesondere einer Langzeit-Wärmeeinwirkung von ca. 85°C, funktionsfähig bleibt.

Die Aufgabe wird mit einer Beilagefolie gemäß Patentanspruch 1 gelöst.

Damit wird erreicht, daß besonders im Kraftfahrzeug als auch in anderen Bereichen mit zeitweise oder langzeitigen honen Temperaturen die Beilagefolien und damit die Kompakt-Kassetten voll funktionstüchtig bleiben.

Eine Kompakt-Kassette mit der oder den erfindungsgemäßen Beilagefolie(n) ist ebenfalls Gegenstand der Erfindung.

In weiteren mechanischen Ausgestaltungen der Beilagefolie kann dieselbe mit Mittellängsknick versehen sein oder kann zwei oder mehr zur Mittellängsachse parallele Längsknicke aufweisen. Die Folie kann auch zusätzlich einen oder zwei Querknicke besitzen.

Die Folie soll aus einem der genannten Kunststoffmaterialien mit einer Glastemperatur von mindestens 85°C bestehen. Mit einem solchen Kunststoffmaterial kann die erfindungsgemäße Beilagefolie ohne Schwierigkeiten realisiert werden und durch die entsprechende Materialauswahl kann der Verlust an Elastizität reduziert werden. Im einzelnen kann das Folienmaterial aus Polyethersulfon oder aus Polysulfon bestehen, die beide eine hohe Glastemperatur von TG $\geqq$ 170°C besitzen und deshalb für hochtemperaturfeste Kompakt-Kassetten sehr geeignet sind. Es können jedoch auch Mischungen oder Copolymere von Polyethersulfonen und Polysulfonen verwandt werden mit denselben Vorteilen. Es ist weiterhin vorteilhaft möglich, als Folienmaterial Polyetherimid zu verwenden. Ferner können auch aromatische Polyester, gebildet aus einer aromatischen Dicarbonsäure und einem aromatischen Diol (Dihydroxyverbindung), z.B. gebildet aus Terephthalatsäure und Bisphenol-A oder einem höherwertigen Alkohol benutzt werden, die bezüglich ihrer Temperaturbeständigkeit mit TG > 100°C den üblicherweise aus Polyethylentherephthalat bestehenden aliphatischen Polyestern (TG $\sim$ 70°C) überlegen sind. Es ist ferner möglich, auch Polycarbonatfolien, die üblicherweise für Elektroisolierzwecke eingesetzt werden und die eine Glastemperatur von ca. 150°C aufweisen, z.B. Makrofol®, eingetragenes Warenzeichen der Fa. Bayer Aktiengesellschaft, zu verwenden. Es kann auch eine Polyaryletherketon-Folie für die erfindungsgemäßen Kassetten und/oder Beilagefolien vorteilhaft benutzt werden, deren Glastemperatur etwa bei 170°C liegt.

Soweit chemisch herstellbar, können auch Mischformen und/oder Copolymerisate des Polysulfons und des Polyethersulfons benutzt werden.

Ausführungsbeispiele

Es wurden Beilagefolien mit unterschiedlichen Längs- und Querknicken hergestellt, d.h. durch Kaltverformung wurden die Knicke erzeugt, und zwar in den Knickformen:

1. 1 Mittellängsknick
2. 2 zueinanderparallele Längsknicke mit Abstand von ca. 1,5 cm voneinander
3. 1 Mittellängsknick und zwei Querknicke symmetrisch zur Mittelquerachse und mit Abstand von ca. 3 cm voneinander.

In unbelastetem Zustand wurde eine Basishöhe von etwa 7 cm gemessen, bei allen Ausführungen (1) bis (3).

Alle Folien hatten die selbe Dicke von 50 µm und vor der Knickerzeugung dieselbe Umrißform und Flächengröße.

Aus den oben und in den Ansprüchen angegebenen Materialien werden die folgenden ausgewählt:

(A) Polyester (Polyetylentherephthalat)

(B) Polycarbonat

(C) Polysulfon (Ultrason® S der BASF Aktiengesellschaft, Ludwigshafen)

Die Glastemperatur TG beträgt 185°C .

Es existiert auch ein Ultrason® E der BASF Aktiengesellschaft, das chemisch ein Polyethersulfon ist und eine Glastemperatur TG von 210°C besitzt.

® eingetragene Warenzeichen der BASF Aktiengesellschaft

Die genannten Kunststoffe Polysulfon, Polyethersulfon und Polyetherimid lassen sich schematisch durch folgende Strukturen darstellen:

Polysulfon 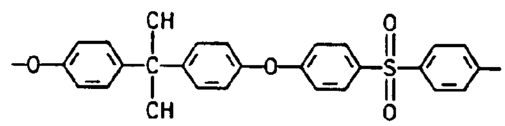 (z.B. Ultrason® S)

Polyethersulfon 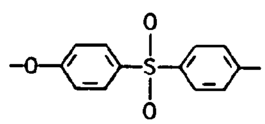 (z.B. Ultrason® E)

Polyetherimid 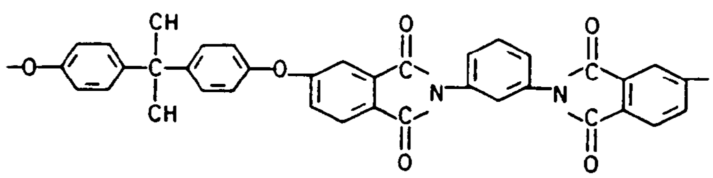

Je 5 Folien jedes Materials A-C und jeder Knickform (1)-(3) wurde vor einer Langzeit-Wärme-Einwirkung (wie noch beschrieben wird) und nach dieser Langzeit-Wärme-Einwirkung mit Gewichten von einer Auflagekraft von 1,2 p bis 3,6 (14,7-35,3 mN) nacheinander belastet und die Höhe a von der Auflagefläche F bis zum Folienknick in mm gemessen. Die jeweils 5 Werte für ein Folienmaterial mit einer bestimmten Knickform wurden gemittelt fm und der Differenzwert Δf dieses Wertes von der Höhe fmax der wieder entlasteten Folie gebildet:

$$fmax - fm = \Delta f.$$

Die Knickformen sind in der Zeichnung schematisch dargestellt und die Meßergebnisse als Federkennlinien in Diagrammen I bis III eingetragen.

Langzeit-Wärme-Lagerung

Das Verfahren der Wärme-Lagerung besteht aus der Abfolge der folgenden Schritte, denen die Kassetten und Folien unterzogen werden, und orientiert sich am sogenannten "Ford-Test" für Kompakt-Kassetten, der aus den Vereinigten Staaten von Amerika stammt:

- Ausgangstemperatur 23°C bei nicht geregelter Feuchte, im Durchschnitt 50 % Feuchte.
- 1,5 Stunden Aufheizen der Kassetten auf 85°C.
- 8 Stunden Lagerung der Kassetten bei 85°C.
- 1,5 Stunden Abkühlen der Kassetten auf 23°C.
- 2 Stunden Verweilzeit bei 23°C.
- Danach Durchführen der Messungen.

Die Kassetten stehen bei der Wärme-Lagerung senkrecht auf der Frontseite des Kassettengehäuses auf einem im Temperaturschrank befindlichem Lochblech, so daß die beiden in der Kassette enthaltenen Beilagefolien völlig gleich behandelt werden.

Die Diagramme I bis III zeigen die Vorher- bzw. Vorher-/Nachher-Federkennlinien der gemittelten Differenz Meßwerte K/Δf) von Beilagefolien mit der Knickhöhe von 7,0 cm vor der Messung und Einheitsstärke von

50 µm bei jeweils gleichen Flächen. Die Knicke wurden ohne Ausnahme nicht thermisch, sondern mechanisch erzeugt. Die Meßeinrichtung für die Messung der Ausgangshöhe a von der Auflagefläche F bis zum höchsten Folienknick (s. Skizze in Diagramm I) bestand dabei aus einer waageartigen Vorrichtung auf die die Gewichte aufgelegt werden und die Auslenkungen mit einer Meßgenauigkeit von 0,1 mm gemessen werden. Die Ansprechgrenze für Auflagekräfte lag dabei bei 1 pond (9,81 mN).

Diagramm I

zeigt die Vorher-Federkennlinien der folgenden Folien

VA1 Polyethylentherephthalat (PETP)-Folie mit 1 Mittellängsknick

VA2 PETP-Folie mit 2 Parallel-Längsknicken Abstand 1,5 cm

VA3 PETP-Folie mit 1 Mittellängsknick und 2 Querknicken symmetrisch zur Quermittelachse und im Abstand von 3 cm zueinander.

Nach der Wärmelagerung waren alle PETP-Folien annähernd völlig flach, und es war keine Federauslenkung bei Belastung mehr vorhanden und meßbar. Diese grundlegende Veränderung der Eigenschaften des Folienmaterials, die durch das Einfrieren der Molekülketten des Kunststoffes hervorgerufen wird, tritt bereits in weniger als 8 Stunden Wärmeeinwirkung ein, sie beginnt etwa mit Erreichen der Glastemperatur von PETP bei TG ~ 70°C.

Dieses Diagramm I wurde zur Demonstration des Standes der Technik aufgenommen, um zu zeigen, wie die üblichen, fast in allen heute auf dem Markt befindlichen Kompakt-Kassetten vorhandenen Beilagefolien sich bei Wärmeeinwirkung verhalten. Sie werden ausnahmslos als Führungsfolien in dem Sinne, daß Federkräfte ausübbar sind, wirkungslos.

Diagramm II

zeigt die Vorher-/Nachher-Federkennlinien der folgenden Folien

VB1 Polycarbonat-Beilagefolie mit 1 Mittellängsknick

NB1

VB2 Polycarbonat-Beilagefolie mit 2 Parallel-Längsknicken mit Abstand 1,5 cm

NB2

VB3 Polycarbonat-Beilagefolie mit 1 Mittellängsknick und 2 Querknicken, symmetrisch zur Quermittelachse und im Abstand von 3 cm zueinander

NB3

Der Buchstabe "V" bezeichnet die Kurven vor der und der Buchstabe "N" die Kurven nach der Wärmelagerung.

Es ergibt sich ein Maximalwert von $\Delta f_V/\Delta f_N$ = 1,33.

Diagramm III

zeigt die Vorher-/Nachher-Federkennlinien der folgenden Folien:

VC1 Polysulfon-Beilagefolie mit 1 Mittellängsknick

NC1

VC2 Polysulfon-Beilagefolie mit 2 Parallellängsknicken symmetrisch zur Mittellängsachse und mit Abstand von 1,5 cm voneinander

NC2

VC3 Polysulfon-Beilagefolie mit 1 Mittellängsknick und 2 Querknicken symmetrisch zur Quermittelachse und im Abstand von 3 cm zueinander.

NC3

Es ergibt sich in Diagramm III ein Maximalwert von $\Delta f_V/\Delta f_N$ von 1,60.

Der Beginn des Belastungskraftbereichs wurde bei 1,5 pond (14,7 mN) gewählt, um der minimalen Ansprechkraft von 1 pond Rechnung zu tragen und dennoch zuverlässige Meßwerte zu erhalten.

Auf den Maximalwert $\Delta f_V/\Delta f_N$ aus den Diagrammen II und III wurde eine Meßtoleranz von max. 25 % aufgeschlagen, was den Höchstwert von 2,0 im Anspruch ergibt.

Außer den genannten Folienmaterialien, die sich auch deshalb für den Einsatz in Kompakt-Kassetten gut eignen, da sie durchsichtig sind, sind auch alle anderen Folienmaterialien mit einer Glastemperatur TG $\geqq$ 85°C erfindungsgemäß verwendbar. Dazu gehören auch besonders die aromatischen Polyesterfolien mit TG $\geqq$ 100°C.

Die erfindungsgemäßen Folien sind mit oben erwähnten Knicken versehen, um für das Band und die Bandwickel in der Kassette die nötige Führung bzw. Lagerung bereitzustellen und dabei durch Verringerung der Kontaktflächen die Gleiteigenschaften (durch Verringerung und Konstanthaltung der Reibungs- und elektrostatischen Aufladungskräfte) zu verbessern. Durch den Einsatz der erfindungsgemäßen Folien lassen sich aufwendige Bandführungseinrichtungen, wie Führungshebel usw., einsparen.

In der Kompakt-Kassette stehen jeder Beilagefolie ca. 0,6 cm lichte Höhe zur Verfügung, in der die Folie ihre Federeigenschaften zur Wirkung bringen kann. Im Durchschnitt werden durch die erfindungsgemäße Folien etwa Kräfte im Bereich von etwa 1,5 p bis 2,5 p (14,7-24,5 mN), vorzugsweise etwa 2 p (19,6 mN), auf die Bandwickel ausgeübt. Kräfte in diesem Größenbereich sind für ein ordnungsgemäßes Funktionieren des Kassetten-Spiel- und Spulbetriebs ausreichend. Erfindungsgemäß wird nunmehr auch für den Fall einer Langzeit-Wärme-Lagerung der Kassetten und/oder Folien sichergestellt, daß die Federcharakteristik bei nach der Wärmelagerung im wesentlichen erhalten bleibt bei leicht größeren Auslenkungen nach der Wärmelagerung im Bereich kleiner gleich dem Doppelten der Auslenkungen vor der Wärmelagerung.

Eine Kompakt-Kassette ist mit Rechteckform Kunststoff-Beilagefolie(n) zwischen Bandwickel(n) und Kassettenwandung(en) mit mindestens einem Längsknick ausgebildet, wobei die Auslenkungen der Beilagefolien in einem definierten Belastungsbereich in den Fällen mit gegenüber ohne Wärmeeinwirkung von ca. 85°C höchstens um den Faktor 2 größer sein sollen. Verwendbar sind Folienmaterialien mit Glastemperaturen gleich oder größer als 85°C, z.B. aus Polysulfon, Polyethersulfon, Polycarbonat, Polyaryletherketonen, Polyetherimid, aromatischen Polyestern und/oder Mischungen und/oder Copolymeren davon.

## Patentansprüche

1. Beilagefolie aus Kunststoff mit etwa einer Rechteckform für eine Kompakt-Kassette, wobei die Kunststoff-Beilagefolie über und/oder unter den Bandwickeln in der Kassette anbringbar ist und diese flächenmäßig im wesentlichen überdeckt und mindestens einen Längsknick zur elastischen Lagerung der Bandwickel aufweist, dadurch gekennzeichnet, daß die Folie aus einem Kunststoff-Material mit einer Glastemperatur $T_G \geqq 85°C$ und einem Kunststoff-Material aus der folgenden Gruppe besteht:
Polysulfon, Polyethersulfon, Abmischungen oder Copolymeren davon, Polyetherimid, aromatischer Polyester, gebildet aus einer aromatischen Dicarbonsäure und einem aromatischen Diol oder aus Terephthalsäure und Bisphenol A, Polycarbonat und Polyaryletherketone
und daß bei Belastung (K) der Folie im Bereich von etwa 14,7 bis 35,3 mN (1,5 bis etwa 3,6 p) für die temperaturabhängigen elastischen Auslenkungen der Folie
$$\Delta f_N : \Delta f_V \leqq 2$$
gilt,
wobei
$\Delta f_V$ eine erste Auslenkung ist, gemessen unter einer vorgegebenen Belastung im oben angegebenen Bereich und bevor die Kunststoff-Beilagefolie einer Temperatur von etwa 85°C ausgesetzt war und
$\Delta f_N$ eine zweite Auslenkung ist, gemessen unter derselben vorgegebenen Belastung und nachdem die Kunststoff-Beilagefolie der Temperatur von etwa 85°C ausgesetzt war.

2. Beilagefolie nach Anspruch 1, dadurch gekennzeichnet, daß die Folie einen Mittellängsknick aufweist.

3. Beilagefolie nach Anspruch 1, dadurch gekennzeichnet, daß die Folie zur Mittelachse parallele Längsknicke aufweist.

4. Beilagefolie nach Anspruch 1, dadurch gekennzeichnet, daß die Folie einen Mittellängsknick und zwei Querknicke aufweist.

5. Beilagefolie nach Anspruch 1, dadurch gekennzeichnet, daß dieselbe transparent ist.

6. Kompakt-Kassette mit Bandwickeln, und mindestens einer Kunststoff-Beilagefolie mit etwa einer Rechteckform, die über und/oder unter den Bandwickeln angeordnet ist, nach einem der Ansprüche 1 bis 5.

## Claims

1. A support liner comprising plastic and having a roughly rectangular shape for a compact cassette, the plastics support liner being capable of being mounted above and/or below the rolls of tape in the cassette and

essentially covering them in an extensive manner and having at least one longitudinal fold for the elastic mounting of the rolls of tape, wherein the liner consists of a plastics material having a glass transition temperature $T_G \geqq 85°C$ and a plastics material selected from the following group:
polysulfone, polyethersulfone, blends or copolymers thereof, polyetherimide, aromatic polyester, formed from an aromatic dicarboxylic acid and an aromatic diol or from terephthalic acid and bisphenol A, polycarbonate and polyaryl ether ketones,
and, when the film is subjected to a load (K) of from 14.7 to 35.3 mN (from 1.5 to about 3.6 p), the following is applicable for the temperature-dependent elastic deflections of the liner

$$\Delta f_N : \Delta f_V \leqq 2,$$

where
$\Delta f_V$ is a first deflection measured under a predetermined load in the abovementioned range and before the plastics support liner was subjected to about 85°C, and
$\Delta f_N$ is a second deflection, measured under the same predetermined load and after the plastics support liner was exposed to about 85°C.

2. A support liner as claimed in claim 1, which has a central longitudinal fold.

3. A support liner as claimed in claim 1, which has longitudinal folds parallel to the central axis.

4. A support liner as claimed in claim 1, which has a central longitudinal fold and two transverse folds.

5. A support liner as claimed in claim 1, which is transparent.

6. A compact cassette having rolls of tape and at least one plastics support film with a roughly rectangular shape which is arranged above and/or below the rolls of tape, as claimed in any of claims 1 to 5.

## Revendications

1. Feuille garniture à peu près rectangulaire en matière plastique pour une cassette compacte, cette feuille pouvant être mise dans la cassette au-dessus et/ou au-dessous des enroulements de bande et couvrant sensiblement ceux-ci suivant une surface et présentant au moins un pli longitudinal pour l'appui élastique des enroulements de bande, caractérisée par le fait qu'elle est constituée d'une matière plastique ayant une température de transition vitreuse $T_G > 85$ °C et d'une matière plastique du groupe suivant :
polysulfone, polyéthersulfone, mélanges ou copolymères de ceux-ci, polyétherimide, polyester aromatique formé à partir d'un acide dicarboxylique aromatique et d'un diol aromatique ou d'acide téréphtalique et de bisphénol A, polycarbonate et polyaryléthercétones,
et qu'en cas de charge (K) de la feuille dans le domaine d'environ 14,7 à 35,3 mN (1,5 à 3,6 gf), les déviations élastiques de celle-ci, dépendant de la température, obéissent à la relation

$$\Delta f_N / \Delta f_V < 2,$$

$\Delta f_V$ étant une première déviation mesurée sous une charge fixée située dans le domaine indiqué ci-dessus et avant que la feuille garniture en matière plastique soit exposée à une température d'environ 85 °C et $\Delta f_N$ une deuxième déviation mesurée sous la même charge fixée et après que la feuille garniture en matière plastique a été exposée à la température d'environ 85 °C.

2. Feuille garniture selon la revendication 1, caractérisée par le fait qu'elle présente un pli longitudinal médian.

3. Feuille garniture selon la revendication 1, caractérisée par le fait qu'elle présente des plis longitudinaux parallèles à son axe.

4. Feuille garniture selon la revendication 1, caractérisée par le fait qu'elle présente un pli longitudinal médian et deux plis transversaux.

5. Feuille garniture selon la revendication 1, caractérisée par le fait qu'elle est transparente.

6. Cassette compacte ayant des enroulements de bande et au moins une feuille garniture à peu près rectangulaire en matière plastique placée au-dessus et/ou au-dessous des enroulements de bande selon une des revendications 1 à 5.

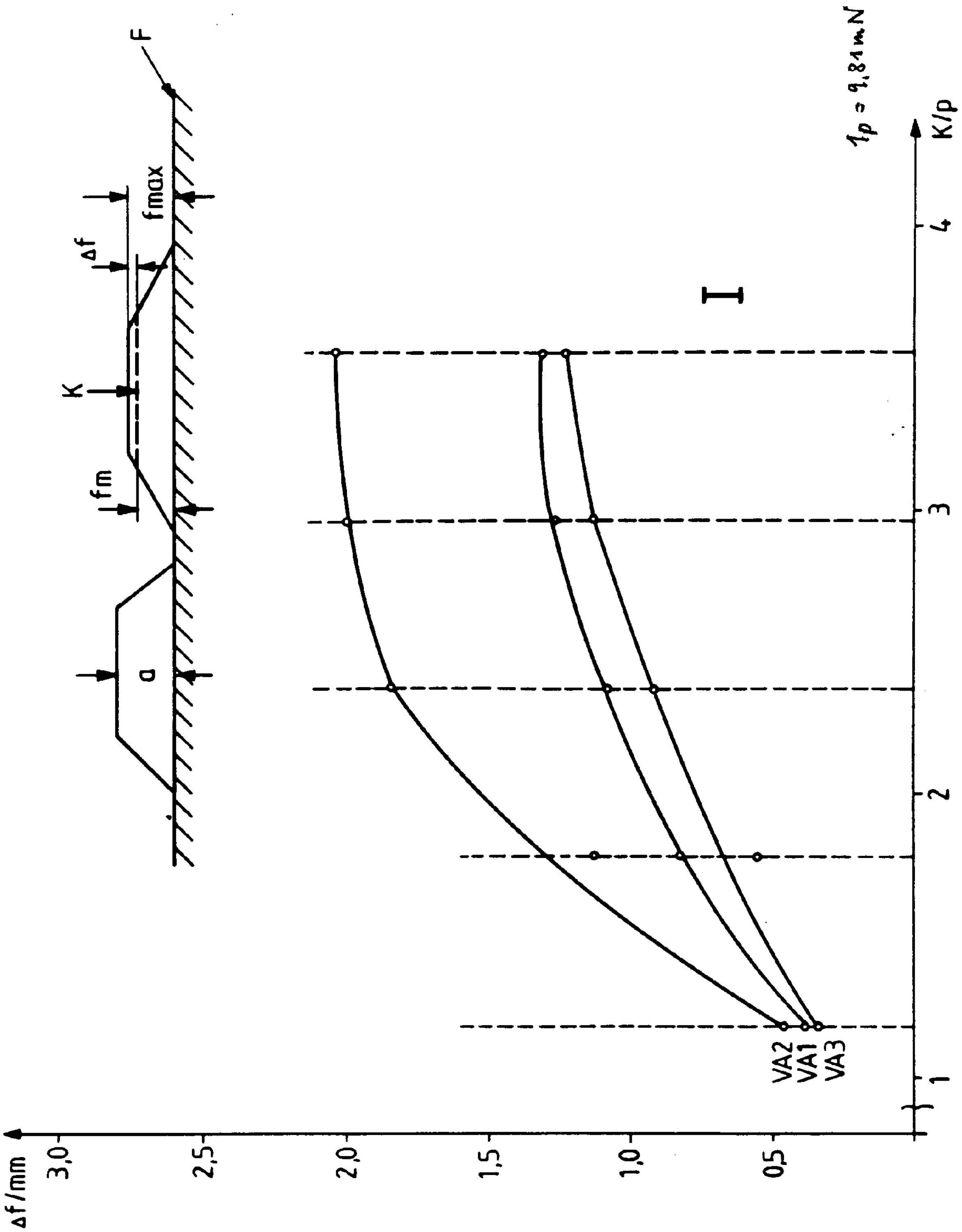

F
fmax
Δf
K
fm
a
1p = 9,81 mN
K/p
I
VA2
VA1
VA3
Δf/mm
3,0
2,5
2,0
1,5
1,0
0,5
1
2
3
4

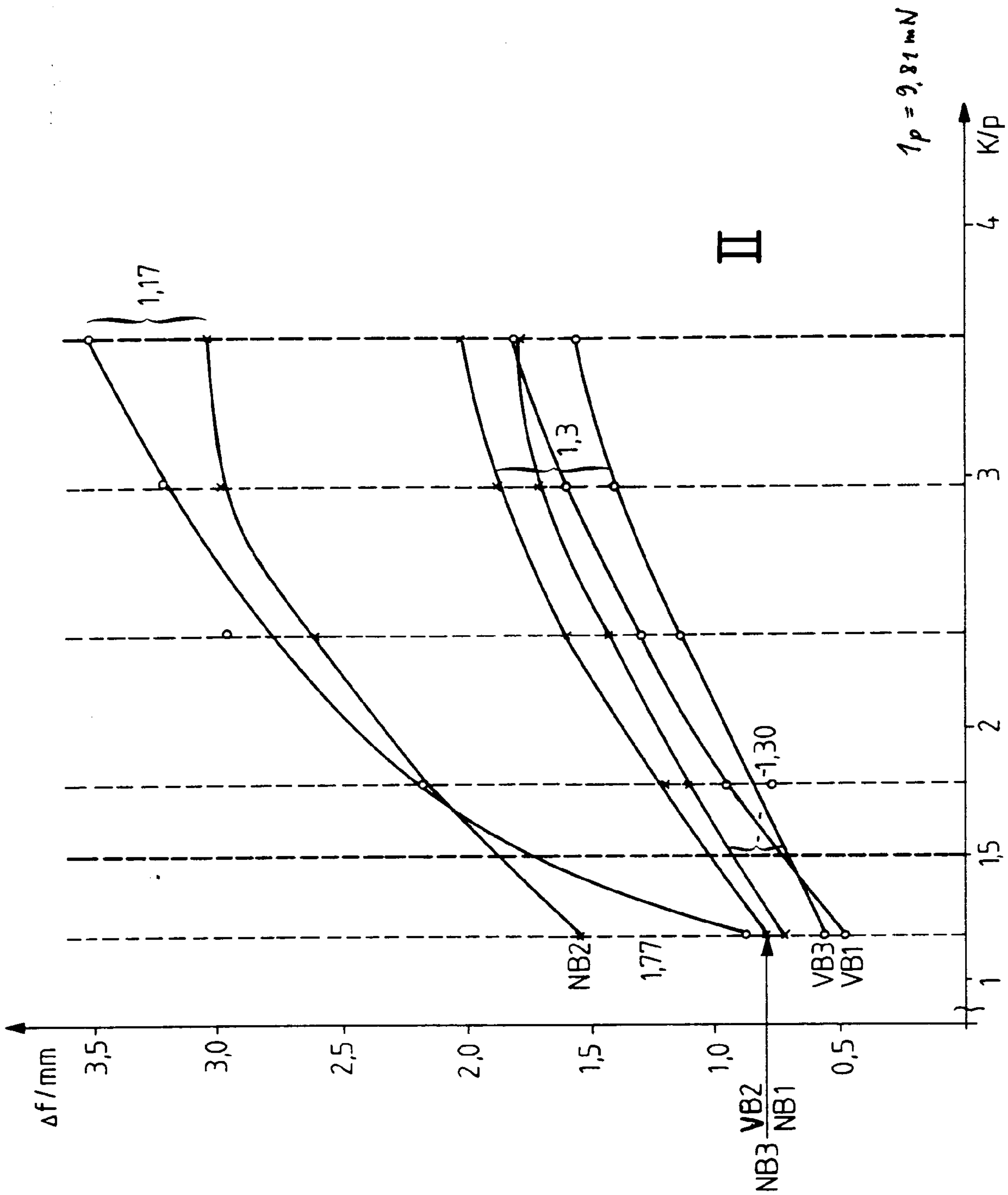
Δf/mm
3,5
3,0
2,5
2,0
1,5
1,0
0,5
NB3 VB2/NB1
NB2
1,77
VB3
VB1
-1,30
1,3
1,17
II
1
1,5
2
3
4
K/p
1p = 9,81 mN

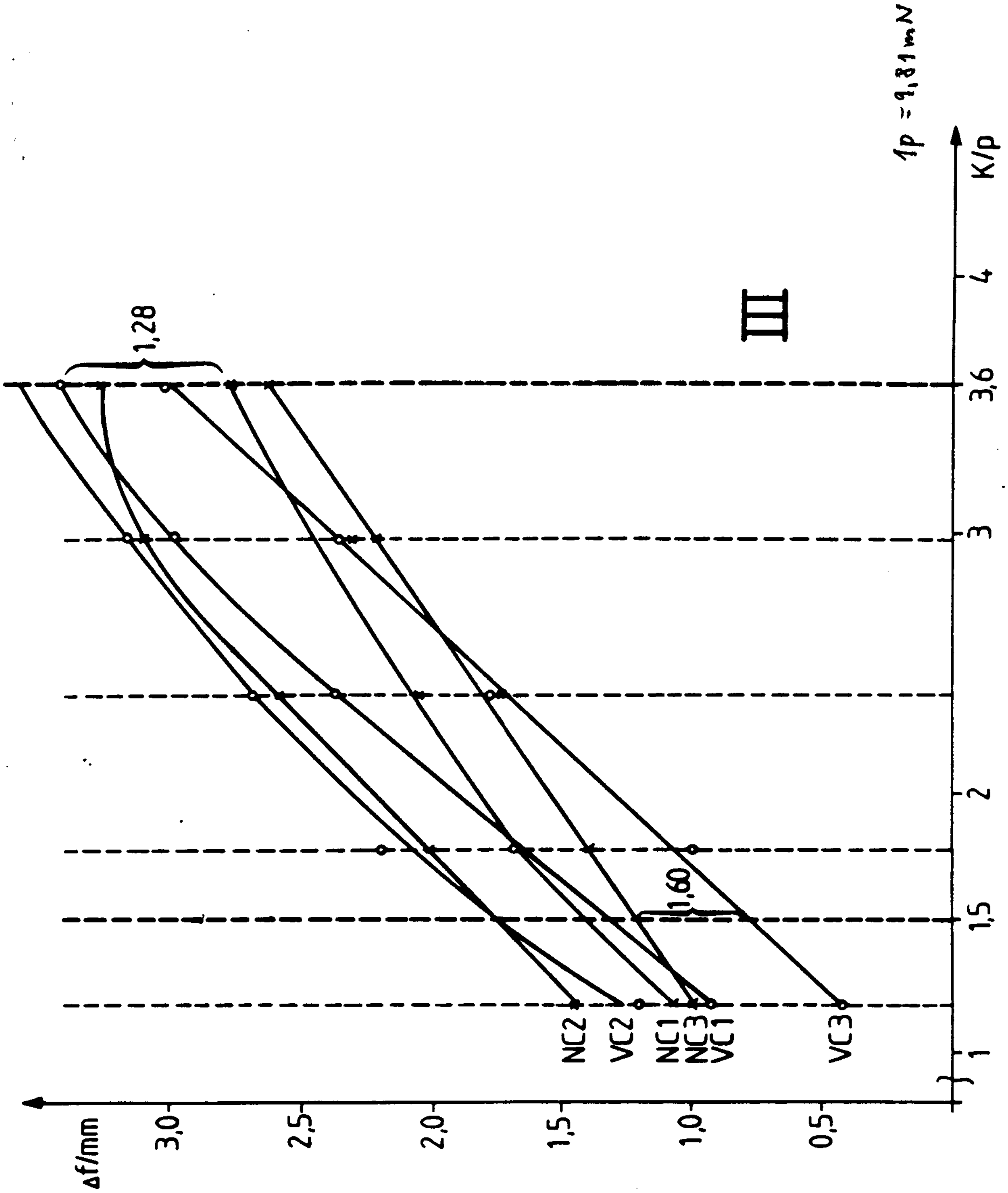
Δf/mm
3,0
2,5
2,0
1,5
1,0
0,5
K/p
1
1,5
2
3
3,6
4
1p = 9,81 mN
III
1,28
1,60
NC2
VC2
NC1
NC3
VC1
VC3